# EUROPEAN PATENT SPECIFICATION

(11) **EP 0 394 271 B1**
(45) Date of publication and mention of the grant of the patent: **30.11.1994**
(21) Application number: 88907209.6
(22) Date of filing: 24.08.1988
(51) Int. Cl.: A63H 3/52, A63H 3/24

(54) **DOLL**
PUPPE
POUPEE

(30) Priority: 24.08.1987 AU 3924/87
(43) Date of publication of application: 31.10.1990
(73) Proprietor: MERREDIN HOLDINGS PTY LTD, Perth, Western Australia 6000 (AU)
(72) Inventor: MERREDIN HOLDINGS PTY LTD, Perth, Western Australia 6000 (AU)
(74) Representative: W.P. Thompson & Co.
(86) International application number: PCT/AU88/00319
(87) International publication number: WO 89/01812

(56) References cited:
- WO-A-85/00914
- DE-A- 1 905 684
- DE-A- 2 059 237
- DE-A- 2 216 008
- FR-A- 1 099 190
- GB-A- 1 176 168
- GB-A- 1 454 601
- GB-A- 2 068 753

## Description

The present invention relates to a doll and, more particularly, to a doll having chambers for receiving liquids and non-liquids or solids for simulating the body functions of a human infant.

DE-A-2216008 discloses a doll having therein a first chamber having an inlet opening by which the first chamber can receive liquid fed to said doll; a second chamber arranged to receive non-liquid material fed to said doll; first discharge means for discharging said liquid from said first chamber to the exterior of the doll, said first discharge means comprising an outlet opening of said first chamber means connected to a first discharge opening at the exterior of the doll; and second discharge means for discharging said non-liquid material from said second chamber means to the exterior of the doll.

In the doll of DE-A-2216008, the first and second discharge means each incorporate a valve for discharging the contents of the first and second chambers. The first discharge means is arranged so that liquid is to be discharged from the first chamber when the doll is in an upright position.

WO-A-85/00914 discloses a toilet training device embodied as an animal, for toilet training of children. This toilet training device has a lower torso having anterior and posterior chambers for receiving water and soft material, respectively. the anterior and posterior chambers are provided with respective access ports for filling the chambers, and respective lower valves through which the contents of the anterior and posterior chambers can pass. The anterior chamber must be squeezed to force liquid therein to pass through its lower valve. The posterior chamber and its lower valve are operated in a similar manner.

DE-A-1905684 discloses a doll having a first or lower and second or upper chambers arranged to receive yellow liquid and brown-liquid material, respectively. the lower and upper chambers are provided with respective discharge means for discharging their contents by squeezing the doll in the vicinity of the respective chamber. The discharge means of the first chamber is arranged so that yellow liquid can be discharged from the first chamber when the doll is in an upright position. The chambers are refilled by squeezing the doll with the outlets immersed in the respective liquids.

FR-A-1099190 discloses a doll which has only a single chamber to receive liquid fed to the doll. The chamber has a divider which divides the chamber into rearward and forward parts. Liquid fed to the doll is received in the rearward part of the chamber whilst the forward part of the chamber is provided with an exit opening for discharging liquid therefrom. The doll of this prior art document does not have two individual chambers for receiving liquid and non-liquid material, respectively. Further, this doll is designed so that it must be tilted forwardly to transfer the liquid contents of the rearward chamber to the forward chamber, whereafter the liquid contents can be discharged by placing the doll lying down on its back.

DE-A-2059237 discloses a doll having a chamber having an upper inlet opening by which liquid fed to the doll can reach the chamber. The latter has an outlet opening connected by a tube to lower discharge opening. The outlet opening is arranged towards the top of the chamber so that liquid can flow out under its own weight when the doll is lying down but not when it is seated or standing. A further opening allows air to enter the chamber to enable the liquid to flow out.
According to the present invention, a doll of the kind disclosed in DE-A-2216008 is characterised in that the outlet opening communicates with the first discharge opening via first tube means, the outlet opening being provided in the doll so that, when the doll is in a substantially upright or cradled position, the level of liquid in the first chamber is below the outlet opening and liquid is prevented from flowing from the outlet opening and, when the doll is in a recumbent position on its back, the outlet opening is below the level of liquid in the first chamber and liquid is able to flow from the outlet opening, such that said liquid is retained in the first chamber when the doll is in said substantially upright or cradled position and said liquid is completely dischargeable from said first chamber to flow from the outlet opening along said first tube means and discharge via said discharge opening only when the doll is in said recumbent position on it back, and in that the inlet opening is arranged such that, when said doll is in said recumbent position on its back, said outlet opening is beneath the level of said inlet opening, and said outlet and inlet openings are further arranged such that, when said doll is in said substantially upright or cradled position, said outlet opening (31) is above the level of said inlet opening.

### BRIEF DESCRIPTION OF THE DRAWINGS

Figure 1 is a side view of a doll in accordance with the present invention showing the principal internal features;
Figure 2 is a perspective view of the valve for controlling discharge of solids, in the open position;
Figure 3 is a perspective view of the valve shown in Figure 2 in the closed position;
Figure 4 is an end view of one of the valve members of the valve shown in Figures 2 and 3;
Figure 5 is a front view of the other of the valve members of the valve shown in Figures 2 and 3;
Figure 6 is another perspective view of the valve shown in Figures 2 and 3 with the valve in a closed position and showing the surrounding band;
Figure 7 shows the valve of Figures 2, 3 and 6 in the closed position in its location in the doll;
Figure 8 shows the valve of Figures 2, 3 and 6 in the open position in its location in the doll;
Figure 9 shows a front view of a chamber pot that may be used with the doll;
Figure 10 shows a side sectional view of the chamber pot shown in Figure 9;
Figure 11 shows a perspective view of the chamber pot shown in Figures 9 and 10;
Figure 11 shows the connection of the head of the doll to the torso thereof;

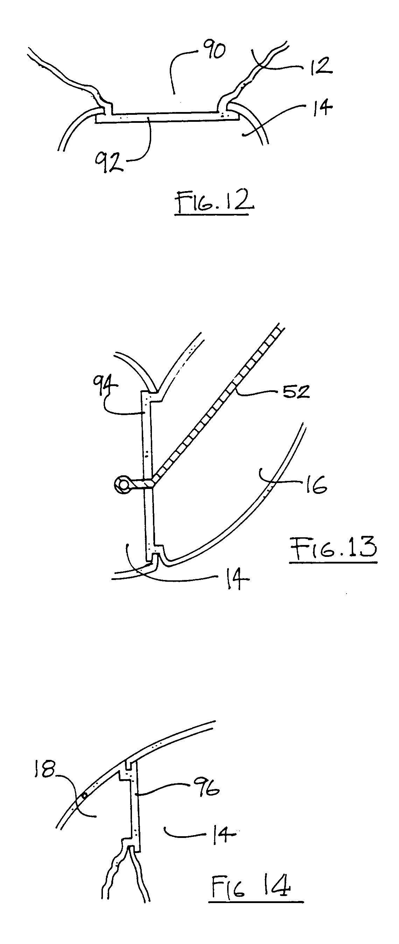

Figure 12 shows the connection of a leg of the doll to the torso thereof; and
Figure 13 shows the connection of an arm of the doll to the torso thereof.

### DESCRIPTION OF THE INVENTION

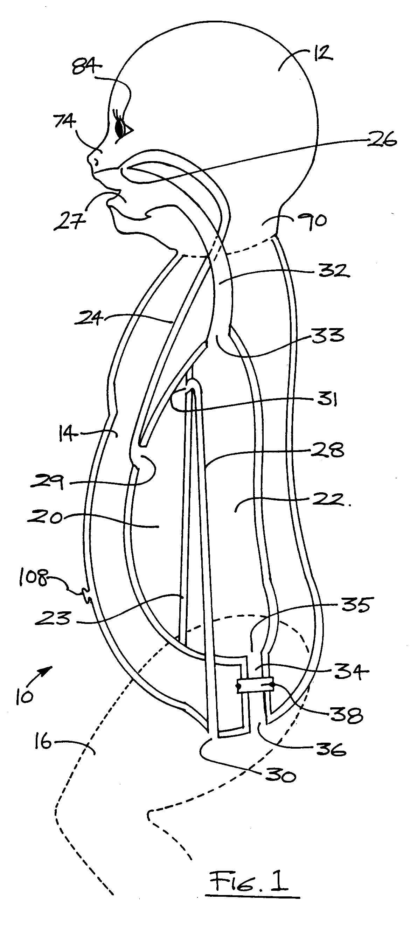

In Figure 1 there is shown a doll 10 in the form of a human infant.

The doll 10 comprises a head 12, torso 14 and legs 16. The head 12 has a nose 74 and eyes 84 Arms 18 (shown in Figure 14) are also provided, but have been omitted from Figure 1 for clarity.

The doll 10 is provided with a first chamber 20 and a second chamber 22 located in the torso 14. The first chamber 20 and second chamber 22 are separated by a wall 23.

The first chamber 20 is arranged to receive liquids that may be fed to the doll 10 and the second chamber 22 is arranged to receive non-liquids or solids that may be fed to the doll 10.

The liquids and non-liquids or solids that are fed to the doll 10 are analogous to beverages and foods that may be fed to live human infants.

A first tube 24 connects the first chamber 20 with an aperture 26 located in the roof of the mouth 27 of the doll 10. The first tube 24 terminates at an inlet opening 29 into the first chamber 20.

A second tube 28 leads from an outlet opening 31 of the first chamber 20 to a discharge opening 30 located in the groin region of the doll 10.

When the doll 10 is in a recumbent position on its back, the wall 23 slopes downwardly to the outlet opening 31 and the second tube 28 slopes downwardly to the discharge opening 30 which is at the exterior of the doll 10. The outlet opening 31 is then at the lowermost part of the first chamber 20 and the discharge opening 30 is then below the level of the outlet opening 31. The inlet opening 29 is positioned at a lower part of the first chamber 20 than the outlet opening 31, when the doll 10 is in a substantially upright or cradled position. Preferably, the inlet opening 29 is positioned in substantially the mid region of the first chamber 20 relative to when the doll 10 is in an upright position as shown in Figure 1.

Preferably, the outlet opening 31 is positioned in substantially the upper region of the first chamber 20 relative to when the doll 10 is in an upright position as shown in Figure 1.

Accordingly, when the doll 10 is to be fed liquids, the doll 10 is positioned in a substantially upright position or a cradled position.

Liquids may then be fed to the doll 10 by using a container having a suitably shaped nozzle which engages in the aperture 26.

The liquid then travels along the first tube 24 and enters the first chamber 20 via the inlet opening 29. Since the doll 10 is in a substantially upright position or cradled position when being fed a liquid, the liquid entering the first chamber 20 collects at the lower region thereof.

Thus, the liquid is unable to flow from the outlet opening 31 since the level of liquid in the first chamber 20 will be below the level of the outlet opening 31.

When the doll 10 is in a recumbent position on its back, the liquid in the first chamber 20 will exit via the outlet opening 31. This will occur because the outlet opening 31 will then be at, or below, the level of the liquid in the first chamber 20 and the wall 23 will slope downwardly to the outlet opening 31. The liquid then flows along the second tube 28 and is discharged via the discharge opening 30 since the discharge opening 30 will be below the level of the outlet opening 31. Accordingly discharge of liquid from the doll 10 when it is in a recumbent position on its back is analogous to a live human infant wetting when lying down, e.g. when sleeping. A third tube 32 connects the second chamber 22 to the mouth 27 of the doll 10. The third tube 32 terminates at an inlet opening 33 into second chamber 22.

A fourth tube 34 leads from an outlet opening 35 of the second chamber 22 to a discharge opening 36.

Non-liquids or solids may be fed to the doll 10 by pushing them to the back of the mouth 27. The non-liquids or solids slide down the third tube 32 and into the second chamber 22 via the inlet opening 33. The non-liquids or solids entering the second chamber 22 collect at the lower region thereof.

The fourth tube 34 is provided with a valve 38 to control discharge of non-liquids or solids from the second chamber 22.

The tubes 24, 28, 32 and 34 thus act as passages for conveying the liquids and non-liquids or solids to and from the first and second chambers 20 and 22.

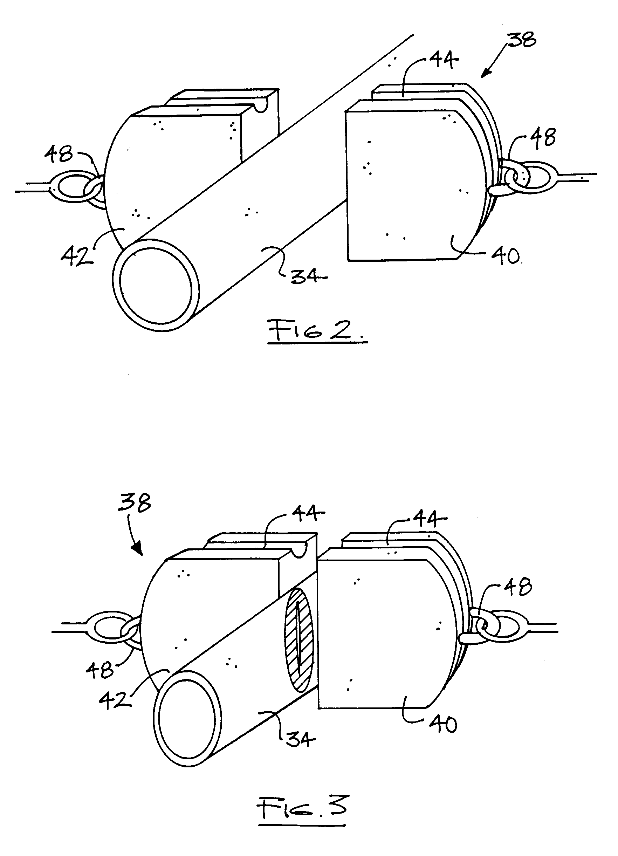

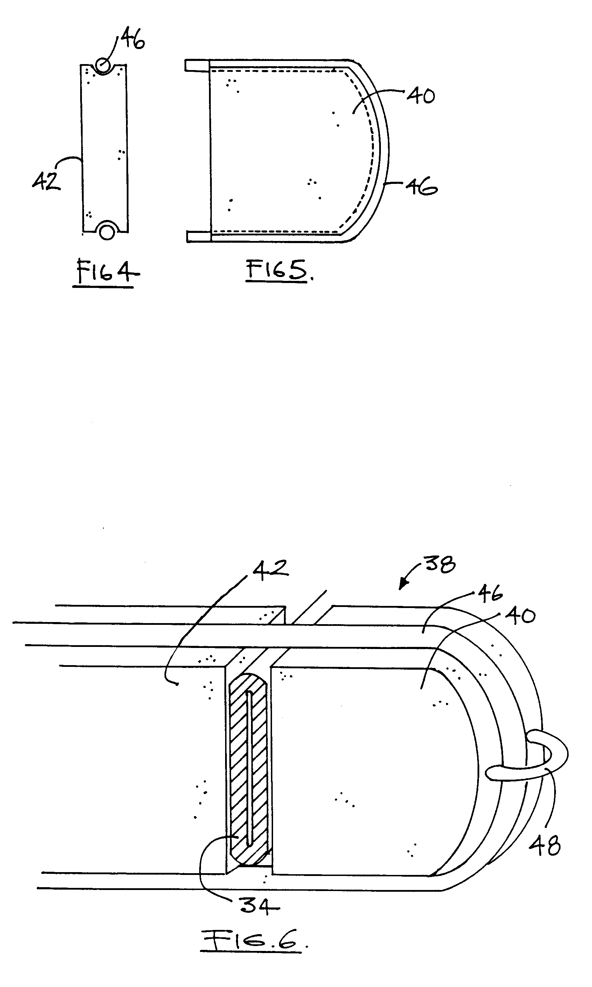

The valve 38 is shown separately in Figures 2 to 6.

The location of the valve 38 in the doll 10 is shown in Figures 1, 7 and 8.

The valve 38 comprises a first member 40 and a second member 42.

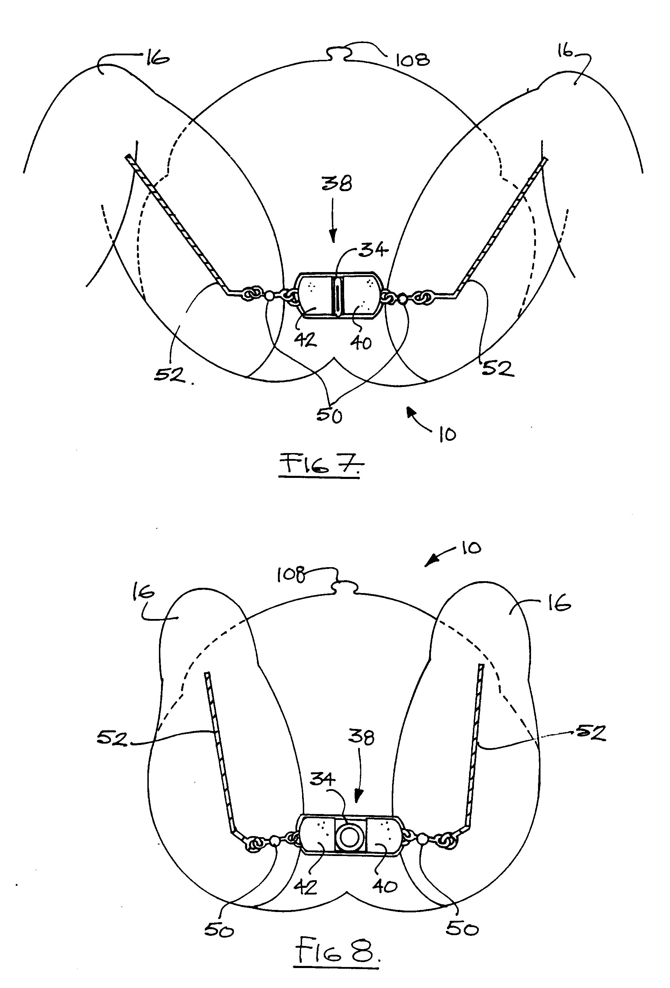

Each valve member 40 and 42 is provided with a groove 44 on its outer edge. An elasticated or rubber band 46 is positioned in the groove 44 to force the valve members 40 and 42 toward one another, thereby closing the valve 38 as shown in Figures 3 and 6. The band 46 has, however, been omitted from Figures 2 and 3 for clarity.

The band 46 biases the valve members 40 and 42 toward one another thus compressing the fourth tube 34 as shown in Figures 3 and 6. Such compression of the fourth tube 34 prevents non-liquids or solids in the second chamber 22 from being discharged therefrom via the discharge opening 36 since the valve 38 is in the closed position.

However, when the band 46 is stretched the compression of the fourth tube 34 is released and non-liquids or solids may be discharged from the discharge opening 36.

Each valve member 40 and 42 is provided with a D-ring 48.

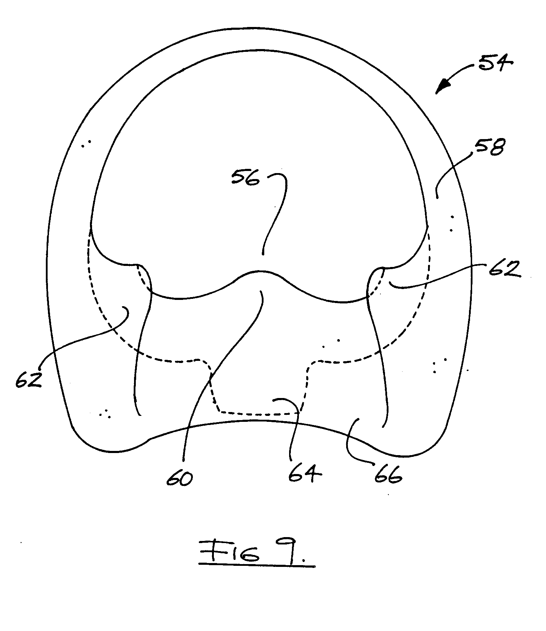

Swivellable links 50 connect the D-rings 48 with rods 52 located in the legs 16 of the doll 10, as shown in Figures 7 and 8.

In the normal position, the legs 16 are in the spread apart position, shown in Figure 7. The rods 52 retain the legs 16 in the spread apart position. In this position, the band 46 retains the valve 38 in the closed position, as previously described.

When the legs 16 are moved toward one another, the valve members 40 and 42 are forced to move away from each other, due to the action of the swivellable links 50 and the rods 52. The valve members 40 and 42 are thus forced to move apart against the force of the band 46 to release the compression of the fourth tube 34 and thereby opening the valve 38. This is shown in Figure 8. Non-liquids or solids will then be able to be discharged from the discharge opening 36.

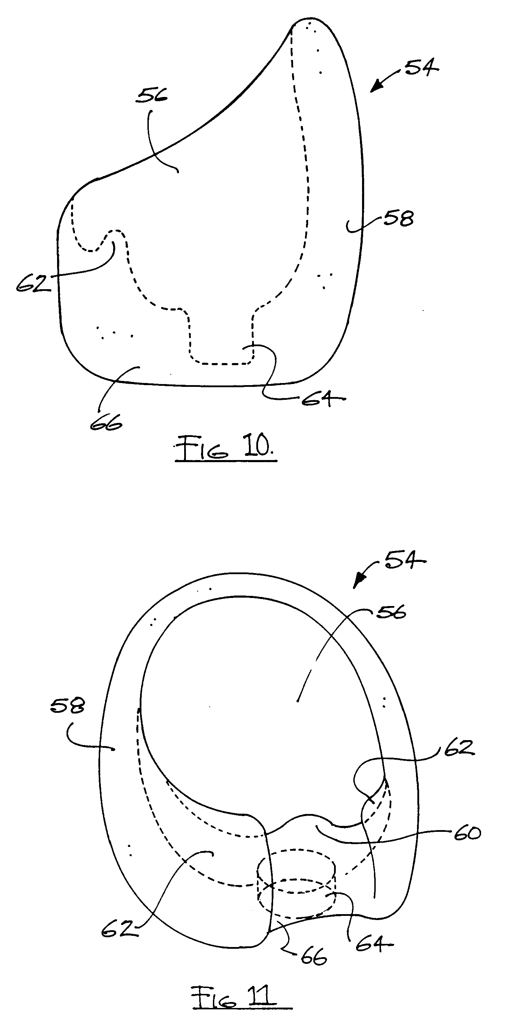

The non-liquids or solids may be caused to discharge from the second chamber 22 by seating the doll 10 in a chamber pot 54 shown in Figures 9, 10 and 11.

The chamber pot 54 comprises a central cavity 56 surrounded by a wall 58 tapering downwardly from the rear to the front of the pot 54. At the front of the pot 54, the upper edge of the wall 58 is contoured in a substantially "W" shape, upon which the undersides of the legs 16 of the doll 10 rest, as generally indicated by reference numeral 60.

At the front of the pot 54, the wall 58 is provided with wings 62. The wings 62 may be moulded integrally with the pot 54.

A recess 64 is provided in the base 66 of the pot 54.

When the doll 10 is seated on the pot 54, the wings 62 maintain the legs 16 of the doll 10 together. In this way the valve 38 is in the open position, shown in Figures 2 and 8, to allow the non-liquids or solids to discharge from the second chamber 22 via the discharge opening 36.

The recess 64 is provided in the base 66 of the pot 54 to receive the discharged non-liquids or solids.

Figures 11, 12 and 13 show the manner in which the head 12, legs 16 and arms 18, respectively, are attached to the torso 14.

The lower portion of the head 12 defines a neck 90. The base of the neck 90 is provided with a flange 92 which engages in an opening in the upper portion of the torso 14, as shown in Figure 11.

The proximal end of each leg 16 is provided with a flange 94 which engages in a respective leg opening in the lower portion of the torso 14, as shown in Figure 12.

In a similar manner, the proximal end of each arm 18 is provided with a flange 96 which engages in a respective arm opening in the upper portion of the torso 14, as shown in Figure 13.

The doll 10 may be made from any suitable materials.

Preferably, the outer wall of the doll 10 is made of rubber and the interior filled with polyurethane foam.

The various components of the valve 38 and the rods 52 are, preferably, made of nylon.

## Claims

1. A doll (10) having therein a first chamber (20) having an inlet opening (29) by which the first chamber (20) can receive liquid fed to said doll (10); a second chamber (22) arranged to receive non-liquid material fed to said doll (10); first discharge means for discharging said liquid from said first chamber (20) to the exterior of the doll (10), said first discharge means comprising an outlet opening (31) of said first chamber (20) connected to a first discharge opening (30) at the exterior of the doll (10); and second discharge means (34, 38) for discharging said non-liquid material from said second chamber (22) to the exterior of the doll, characterised in that the outlet opening (31) communicates with the first discharge opening (30) via first tube means (28), the outlet opening (31) being provided in the doll (10) so that, when the doll (10) is in a substantially upright or cradled position, the level of liquid in the first chamber (20) is below the outlet opening (31) and liquid is prevented from flowing from the outlet opening (31) and, when the doll (10) is in a recumbent position on its back, the outlet opening (31) is below the level of liquid in the first chamber (20) and liquid is able to flow from the outlet opening (31), such that said liquid is retained in the first chamber (20) when the doll (10) is in said substantially upright or cradled position and said liquid is completely dischargeable from said first chamber (20) to flow from the outlet opening (31) along said first tube means (28) and discharge via said discharge opening (30) only when the doll (10) is in said recumbent position on it back, and in that the inlet opening (29) is arranged such that, when said doll (10) is in said recumbent position on its back, said outlet opening (31) is beneath the level of said inlet opening (29), and said outlet and inlet openings (31,29) are further arranged such that, when said doll (10) is in said substantially upright or cradled position, said outlet opening (31) is above the level of said inlet opening (29).

2. A doll (10) according to claim 1, in which said first chamber (20) has a wall (23) which is arranged such that, when said doll (10) is in said recumbent position on its back, said wall (23) slopes downwardly to said outlet opening (31) to enable said liquid to discharge from said first chamber (20).

3. A doll (10) according to claim 1 or 2 in which, when said doll (10) is in said recumbent position on its back, said outlet opening (31) is at substantially the lowermost part of said first chamber (20) to enable said liquid to discharge from said first chamber (20).

4. A doll (10) according to any of claims 1 to 3, in which, when said doll (10) is in said recumbent position on its back, said first discharge opening (30) is beneath the level of said outlet opening (31) to enable said liquid to flow along said first tube means (28) to said first discharge opening (30).

5. A doll (10) according to any of claims 1 to 4, in which said second discharge means (34,38) comprises a second tube (34) and valve means (38) operable on said second tube (34) to control the discharge of said non-liquid material from said second chamber (22).

6. A doll (10) according to claim 5, wherein said valve means (38) includes a pair of valve members (40,42) biased toward one another under influence of biasing means (46) to maintain said valve means (38) in a closed position and a portion of said second tube (34) is positioned between said valve members (40,42) and compressed thereby to close off said second tube means (34) and prevent discharge of non-liquid material.

7. A doll (10) according to claim 6, which further comprises a pair of legs (16) which contain respective rod means (52) connected to a respective one of said valve members (40,42) such that, when said legs (16) are in a spread apart position, said valve means (38) remains in said closed position, and when said legs (16) are brought together, said valve members (40,42) are moved apart against said influence of said biasing means (46) thereby to release the compression of said second tube (34) and open said valve means (38).

8. A doll (10) according to claim 6 or 7, wherein said biasing means (46) comprises a resilient band around said valve members (40,42) to bias said valve members (40,42) towards one another.

9. A doll (10) according to claim 8, wherein each of said valve members (40,42) is provided with a groove (44) in which said resilient band (46) is positioned.

10. A doll (10) according to claim 5, in which said second tube (34) leads from an outlet opening (35) of said second chamber (22) to a second discharge opening (36), and said second chamber (22) has an inlet opening (33) for entry of said non-liquid material.

11. A doll (10) according to claim 10, which further comprises a head (12) having a mouth (27), and in which a third tube (24) connects said inlet opening (29) of said first chamber (20) to an opening (26) in said mouth (27), and a fourth tube (32) connects said inlet opening (33) of said second chamber (22) to said mouth (27) such that said liquid and said non-liquid material fed to said doll (10) are delivered to said first and second chambers (20,22), respectively.

## Patentansprüche

1. Puppe (10) mit einer darin befindlichen ersten Kammer (20), die eine Einlaßöffnung (29) aufweist, durch die die erste Kammer (20) der genannten Puppe (10) zugeführte Flüssigkeit aufnehmen kann; einer zweiten Kammer (22) zum Aufnehmen von der genannten Puppe (10) zugeführtem nichtflüssigem Material; einem ersten Ablaßmittel zum Ablassen der genannten Flüssigkeit aus der genannten ersten Kammer (20) zur Außenseite der Puppe (10), wobei das genannte erste Ablaßmittel eine Auslaßöffnung (31) der genannten ersten Kammer (20) aufweist, die mit einer ersten Auslaßöffnung (30) an der Außenseite der Puppe (10) verbunden ist; und einem zweiten Auslaßmittel (34, 38) zum Ablassen des genannten nichtflüssigen Materials aus der genannten zweiten Kammer (22) zur Außenseite der Puppe, dadurch gekennzeichnet, daß die Auslaßöffnung (31) über eine erste Rohrleitung (28) Verbindung mit der ersten Auslaßöffnung (30) hat, wobei die Auslaßöffnung (31) so in der Puppe (10) angeordnet ist, daß, wenn sich die Puppe (10) in einer im wesentlichen aufrechten oder gewiegten Position befindet, der Stand der Flüssigkeit in der ersten Kammer (20) unterhalb der Auslaßöffnung (31) liegt und Flüssigkeit am Ausfließen aus der Auslaßöffnung (31) gehindert wird, und, wenn sich die Puppe (10) in einer auf dem Rücken liegenden Position befindet, die Auslaßöffnung (31) unterhalb des Flüssigkeitsstandes in der ersten Kammer (20) liegt und Flüssigkeit aus der Auslaßöffnung (31) herausfließen kann, so daß die genannte Flüssigkeit in der ersten Kammer (20) gehalten werden kann, wenn sich die Puppe (10) in einer im wesentlichen aufrechten oder gewiegten Position befindet, und die genannte Flüssigkeit nur dann vollständig aus der genannten ersten Kammer (20) entleert werden, durch die genannte erste Rohrleitung (28) aus der Auslaßöffnung (31) fließen und über die genannte Ablaßöffnung (30) abfließen kann, wenn sich die Puppe (10) in der genannten auf dem Rücken liegenden Position befindet, und dadurch, daß die Einlaßöffnung (29) so angeordnet ist, daß, wenn sich die genannte Puppe (10) in ihrer auf dem Rücken liegenden Position befindet, die genannte Auslaßöffnung (31) unterhalb der Höhe der genannten Einlaßöffnung (29) liegt, wobei die genannten Auslaß- und Einlaßöffnungen (31, 29) weiterhin so angeordnet sind, daß, wenn sich die genannte Puppe (10) in der genannten im wesentlichen aufrechten oder gewiegten Position befindet, die genannte Auslaßöffnung (31) oberhalb der Höhe der genannten Einlaßöffnung (29) befindet.

2. Puppe (10) nach Anspruch 1, wobei die genannte erste Kammer (20) eine Wand (23) aufweist, die so angeordnet ist, daß, wenn sich die genannte Puppe (10) in der genannten auf dem Rücken liegenden Position befindet, die genannte Wand (23) nach unten zur genannten Auslaßöffnung (31) geneigt ist, so daß die genannte Flüssigkeit aus der genannten ersten Kammer (20) abfließen kann.

3. Puppe (10) nach Anspruch 1 oder 2, wobei sich die genannte Auslaßöffnung (31), wenn sich die genannte Puppe (10) in der genannten auf dem Rücken liegenden Position befindet, im wesentlichen im untersten Teil der genannten ersten Kammer (20) befindet, so daß die genannte Flüssigkeit aus der genannten ersten Kammer (20) ablaufen kann.

4. Puppe (10) nach einem der Ansprüche 1 bis 3, wobei sich die genannte erste Ablaßöffnung (30), wenn sich die genannte Puppe (10) in der genannten auf dem Rücken liegenden Position befindet, unterhalb der Höhe der genannten Auslaßöffnung (31) befindet, so daß die genannte Flüssigkeit durch die genannte erste Rohrleitung (28) zu der genannten ersten Ablaßöffnung (30) fließen kann.

5. Puppe (10) nach einem der Ansprüche 1 bis 4, wobei das genannte zweite Ablaßmittel (34, 38) eine zweite Rohrleitung (34) und ein Ventil (38) aufweist, das bei der genannten zweiten Rohrleitung (34) das Auslaufen des genannten nichtflüssigen Materials aus der genannten zweiten Kammer (22) regelt.

6. Puppe (10) nach Anspruch 5, wobei das genannte Ventil (38) ein Paar Ventilelemente (40, 42) aufweist, die unter der Wirkung von Vorspannmitteln (46) zueinander vorgespannt sind, um das genannte Ventil (38) in einer geschlossenen Position zu halten, und wobei ein Abschnitt der genannten zweiten Rohrleitung (34) zwischen den genannten Ventilelementen (40, 42) positioniert und von diesen zusammengedrückt wird, um die genannte zweite Rohrleitung (34) zu schließen und ein Auslaufen von nichtflüssigem Material zu verhindern.

7. Puppe (10) nach Anspruch 6, weiterhin umfassend ein Paar Beine (16), die jeweils einen mit einem entsprechenden der genannten Ventilelemente (40, 42) verbundenen Stab (52) enthalten, so daß, wenn sich die genannten Beine (16) in einer gespreizten Position befinden, das genannte Ventil (38) in seiner geschlossenen Position bleibt, und wenn die genannten Beine (16) zusammengebracht werden, die genannten Ventilelemente (40, 42) gegen die genannte Wirkung der genannten Vorspannmittel (46) auseinanderbewegt werden, um so die Kompression der genannten zweiten Rohrleitung (34) zu lösen und das genannte Ventil (38) zu öffnen.

8. Puppe (10) nach Anspruch 6 oder 7, wobei das genannte Vorspannmittel (46) ein elastisches Band um die genannten Ventilelemente (40, 42) aufweist, um die genannten Ventilelemente (40, 42) zueinander vorzuspannen.

9. Puppe (10) nach Anspruch 8, wobei jedes der genannten Ventilelemente (40, 42) mit einer Nut (44) versehen ist, in der das genannte elastische Band (46) positioniert ist.

10. Puppe (10) nach Anspruch 5, wobei die genannte zweite Rohrleitung (34) von einer Auslaßöffnung (35) der genannten zweiten Kammer (22) zu einer zweiten Ablaßöffnung (36) verläuft und wobei die genannte zweite Kammer (22) eine Einlaßöffnung (33) für den Eintritt des genannten nichtflüssigen Materials aufweist.

11. Puppe (10) nach Anspruch 10, die weiterhin einen Kopf (12) mit einem Mund (27) aufweist und bei der eine dritte Rohrleitung (24) die genannte Einlaßöffnung (29) der genannten ersten Kammer (20) mit einer Öffnung (26) in dem genannten Mund (27) verbindet, und bei der eine vierte Rohrleitung (32) die genannte Einlaßöffnung (33) der genannten zweiten Kammer (22) mit dem genannten Mund (27) auf eine solche Weise verbindet, daß die genannte Flüssigkeit und das genannte nichtflüssige Material, die der genannten Puppe (10) zugeführt werden, jeweils in die genannte erste und die genannte zweite Kammer (20, 22) gelangen.

## Revendications

1. Poupée (10) ayant en elle une première chambre (20) ayant une ouverture d'admission (29) par laquelle la première chambre (20) peut recevoir un liquide donné à manger à ladite poupée (10); une seconde chambre (22) disposée pour recevoir un corps non liquide donné à manger à ladite poupée (10); un premier moyen d'évacuation pour évacuer ledit liquide hors de ladite première chambre (20) vers l'extérieur de la poupée (10), ledit premier moyen d'évacuation comprenant une ouverture de sortie (31) de ladite première chambre (20) connectée à une première ouverture d'évacuation (30) à l'extérieur de la poupée (10); et un second moyen d'évacuation (34, 38) pour évacuer ledit corps non liquide hors de ladite seconde chambre (22) vers l'extérieur de la poupée, caractérisée en ce que la première ouverture de sortie (31) communique avec la première ouverture d'évacuation (30) par l'intermédiaire d'un premier moyen de tube (28), l'ouverture de sortie (31) étant fournie dans la poupée (10) de sorte que, quand la poupée (10) est dans une position substantiellement verticale ou bercée, le niveau de liquide dans la première chambre (20) est en dessous de l'ouverture de sortie (31) et le liquide ne peut pas s'écouler de l'ouverture de sortie (31) et, quand la poupée (10) est dans une position couchée sur le dos, l'ouverture de sortie (31) est en dessous du niveau de liquide dans la première chambre (20) et le liquide peut s'écouler de l'ouverture de sortie (31), de sorte que ledit liquide est retenu dans la première chambre (20) quand la poupée (10) est dans ladite position substantiellement verticale ou bercée et ledit liquide peut être complètement évacué de ladite première chambre (20) pour s'écouler par l'ouverture de sortie (31) le long dudit premier moyen de tube (28) et s'évacuer par l'intermédiaire de ladite ouverture d'évacuation (30) seulement quand la poupée (10) est dans ladite position couchée sur le dos, et en ce que l'ouverture d'admission (29) est disposée de sorte que, quand ladite poupée (10) est dans ladite position couchée sur le dos, ladite ouverture de sortie (31) est en dessous du niveau de ladite ouverture d'admission (29), et lesdites ouvertures de sortie et d'admission (31,29) sont en outre disposées de sorte que, quand ladite poupée (10) est dans ladite position substantiellement verticale ou bercée, ladite ouverture de sortie (31) est au-dessus du niveau de ladite ouverture d'admission (29).

2. Poupée (10) selon la revendication 1, dans laquelle ladite première chambre (20) a une paroi (23) qui est disposée de sorte que, quand ladite poupée (10) est dans ladite position couchée sur le dos, ladite paroi (23) penche vers le bas vers ladite ouverture de sortie (31) pour permettre audit liquide de s'évacuer hors de ladite première chambre (20).

3. Poupée (10) selon la revendication 1 ou 2, dans laquelle, quand ladite poupée (10) est dans ladite position couchée sur le dos, ladite ouverture de sortie (31) est à substantiellement la partie la plus basse de ladite première chambre (20) pour permettre audit liquide de s'évacuer hors de ladite première chambre (20).

4. Poupée (10) selon l'une quelconque des revendications 1 à 3, dans laquelle, quand ladite poupée (10) est dans ladite position couchée sur le dos, ladite première ouverture d'évacuation (30) est en dessous du niveau de ladite ouverture de sortie (31) pour permettre audit liquide de s'écouler le long dudit premier moyen de tube (28) vers ladite première ouverture d'évacuation (30).

5. Poupée (10) selon l'une quelconque des revendications 1 à 4, dans laquelle ledit second moyen d'évacuation (34,38) comprend un second tube (34) et moyen de clapet (38) actionnable sur ledit second tube (34) pour commander l'évacuation dudit corps non liquide hors de ladite seconde chambre (22).

6. Poupée (10) selon la revendication 5, dans laquelle ledit moyen de clapet (38) comporte une paire d'éléments de clapet (40,42) chargés préliminairement l'un vers l'autre sous l'influence d'un moyen de charge préliminaire (46) pour maintenir ledit moyen de clapet (38) dans une position fermée et une partie dudit second tube (34) est positionnée entre lesdits éléments de clapet (40,42) et comprimée par ceux-ci pour fermer ledit second moyen de tube (34) et empêcher l'évacuation dudit corps non liquide.

7. Poupée (10) selon la revendication 6, qui comprend en outre une paire de jambes (16) qui contiennent des moyens de tige respectifs (52) connectés à l'un respectif desdits éléments de clapet (40,42) de sorte que, quand lesdites jambes (16) sont en position écartée, ledit moyen de clapet (38) reste dans ladite position fermée, et quand lesdites jambes (16) sont resserrées, lesdits éléments de clapet (40,42) sont écartés contre ladite influence dudit moyen de charge préliminaire (46) pour ainsi relâcher la compression dudit second tube (34) et ouvrir ledit moyen de clapet (38).

8. Poupée (10) selon la revendication 6 ou 7, dans laquelle ledit moyen de charge préliminaire (46) comprend un élastique autour desdits éléments de clapet (40,42) pour charger préliminairement lesdits éléments de clapet (40,42) l'un vers l'autre.

9. Poupée (10) selon la revendication 8, dans laquelle chacun desdits éléments de clapet (40,42) est doté d'une rainure (44) dans laquelle ledit élastique (46) est placé.

10. Poupée (10) selon la revendication 5, dans laquelle ledit second tube (34) va depuis une ouverture de sortie (35) de ladite seconde chambre (22) jusqu'à une seconde ouverture d'évacuation (36), et ladite seconde chambre (22) a une ouverture d'admission (33) pour l'entrée dudit corps non liquide.

11. Poupée (10) selon la revendication 10, qui comprend en outre une tête (12) ayant une bouche (27), et dans laquelle un troisième tube (24) connecte ladite ouverture d'admission (29) de ladite première chambre (20) à une ouverture (26) dans ladite bouche (27), et un quatrième tube (32) connecte ladite ouverture d'admission (33) de ladite seconde chambre (22) à ladite bouche (27) de sorte que ledit liquide et ledit corps non liquide donnés à manger à ladite poupée (10) sont amenés auxdites première et seconde chambres respectivement (20,22).
